# EUROPÄISCHE PATENTSCHRIFT

(11) **EP 3 936 354 B1**
(45) Veröffentlichungstag und Bekanntmachung des Hinweises auf die Patenterteilung: **30.08.2023**
(21) Anmeldenummer: 20382611.0
(22) Anmeldetag: 08.07.2020
(51) Int. Cl.: B60G 7/00

(54) **CHASSIS-BAUTEIL FÜR EIN KRAFTFAHRZEUG**
CHASSIS COMPONENT FOR A MOTOR VEHICLE
ÉLEMENT DE CHÂSSIS POUR UN VÉHICULE AUTOMOBILE

(43) Veröffentlichungstag der Anmeldung: 12.01.2022
(73) Patentinhaber: Autotech Engineering S.L., 48340 Amorebieta-Etxano (ES); GESTAMP TALLENT LIMITED, Newton Aycliffe, County Durham DL5 6EP (GB)
(72) Erfinder: Johnson, Alice, Bowburn, Durham DH6 5FD (GB); Bone, Gareth, Langley Moor, Durham DH7 8LW (GB); Bedson, Jamie, North Yorkshire, yorkshire HG1 4FE (GB)
(74) Vertreter: Cohausz & Florack

(56) Entgegenhaltungen:
- EP-A1- 3 564 053
- WO-A1-2015/159038
- WO-A2-2012/167879
- DE-A1-102011 003 971
- DE-A1-102013 014 550
- DE-A1-102013 201 058
- DE-A1-102013 214 673
- DE-A1-102014 015 870
- DE-A1-102018 202 307
- KR-A- 20180 036 365
- KR-B1- 101 393 849
- US-A1- 2011 189 428
- US-A1- 2016 052 564

## Beschreibung

Die Erfindung betrifft ein Chassis-Bauteil entsprechend den Merkmalen des Anspruchs 1.

Chassis-Bauteile für Kraftfahrzeuge, insbesondere Querlenker, sind in verschiedenen Ausführungen bekannt. Derartige Chassis-Bauteile werden üblicherweise aus tiefgezogenen Stahlblechen gebildet. Nachteilig an Chassis-Bauteilen aus Stahlblech ist ihr relativ hohes Gewicht.

Des Weiteren sind Chassis-Bauteile für Kraftfahrzeuge, insbesondere Querlenker bekannt, die aus Aluminiumlegierungen mittels eines Gießverfahrens gefertigt werden. Derartige Chassis-Bauteile haben zwar ein relativ geringes Gewicht, sie sind jedoch aufgrund des Aluminiumwerkstoffs deutlich teurer als entsprechende Chassis-Bauteile aus Stahlblech.

Ferner sind Chassis-Bauteile für Kraftfahrzeuge, insbesondere Querlenker bekannt, die in Metall-Kunststoff-Hybrid-Bauweise ausgeführt sind.

Die DE 20 2009 014 194 A1 beschreibt einen Querlenker, der einen Grundkörper aus metallischem Tiefziehblech mit Lagerstellen zur Anordnung des Querlenkers an einer Karosserie eines Kraftwagens aufweist. Der Grundkörper ist durch eine Verstärkungsstruktur aus Kunststoff verstärkt, die eine Vielzahl von kreuzförmigen Rippen aufweist. Der Grundkörper wird hierzu mittels eines Spritzgussverfahrens mit dem Kunststoff umspritzt. Als Kunststoff wird dabei z. B. Polyamid 6 mit 60% Glasfasern verwendet.

Ein ähnliches Fahrwerksbauteil in Metall-Kunststoff-Hybrid-Bauweise ist aus der DE 10 2018 217 910 B3 bekannt. Das dort vorgeschlagene Fahrzeugbauteil besteht im Wesentlichen aus einem aus Metallblech gebildeten Strukturteil und einer Umhüllung aus Kunststoff. Das Strukturteil weist Haltestellen auf, an denen das Strukturteil in einem Spritz- oder Gusswerkzeug gehalten wird. An der jeweiligen Haltestelle wird eine Haltestellenabdeckung angeordnet, die das Strukturteil kontaktiert und teilweise von dem Material der Umhüllung umspritzt oder umgossen wird. Die Haltestellenabdeckung und die Umhüllung können dabei aus demselben Material gebildet sein.

Die WO 2018/166691 A1 offenbart eine Fahrwerkskomponente, die insbesondere als Querlenker für einen Personenkraftwagen ausgeführt sein kann. Die Fahrwerkskomponente umfasst ein Kernmodul mit einer Umspritzung, wobei das Kernmodul aus wenigstens zwei Lastleitungselementen und wenigstens einem die Lastleitungselemente verbindenden Lastübertragungselement zusammengesetzt ist. Während die Lastleitungselemente eine hülsenförmige Form aufweisen können und aus Metall, z. B. aus einer Stahl- oder Aluminiumlegierung hergestellt sind, ist das Lastübertragungselement aus faserverstärktem Kunststoff hergestellt, z. B. aus Kohlenstofffasern enthaltendem Polyamid PA6.6. Auch die Umspritzung kann aus fasergefülltem Kunststoff hergestellt sein. Des Weiteren kann die Umspritzung Versteifungsrippen aufweisen. Zudem kann die Fahrwerkskomponente ein außenseitig an der Umspritzung angeordnetes Versteifungselement aufweisen. Das Versteifungselement kann dabei zunächst gesondert hergestellt und nachfolgend mit der Umspritzung gefügt werden. Die Umspritzung und das Versteifungselement können dabei miteinander an Versteifungsrippen des Versteifungselements verschweißt werden.

Die DE 10 2014 015 870 A1 offenbart ein Chassis-Bauteil entsprechend dem Oberbegriff des Anspruchs 1 und beschreibt ein Fahrwerksbauteil für ein Kraftfahrzeug aus einem kurzfaserverstärkten Kunststoff. Das Fahrwerksbauteil weist mindestens einen in einem ersten Spritzgussvorgang hergestellten Kern und mindestens eine in einem zweiten Spritzgussvorgang hergestellte, den Kern umhüllende Umspritzung auf, wobei der Kern und die Umspritzung aus dem gleichen kurzfaserverstärkten Kunststoff bestehen. Gemäß einer Ausgestaltung weist der Kern in seiner Oberfläche rillenförmige Vertiefungen auf. Hierdurch soll eine hochbelastbare Verbindung zwischen Kern und Umspritzung sichergestellt werden. Die rillenförmigen Vertiefungen sind keine wandförmigen Rippen. Verrippungen sind bei dem Fahrwerksbauteil ausdrücklich nicht vorhanden.

Die DE 10 2011 003 971 A1 offenbart einen Radführungslenker eines Kraftfahrzeugs, der zumindest zwei Endbereiche mit jeweils einem Lagerungsabschnitt und zumindest einen die Endbereiche verbindenden Strebenbereich aufweist. Die Endbereiche und der Strebenbereich sind dabei gemeinsam durch einen kastenförmig tiefgezogenen Profilträger gebildet, wobei der Profilträger aus einem plattenförmigen Kunststoffhalbzeug mit Endlosfaserverstärkungen gefertigt wurde. Im Innenraum des tiefgezogenen Profilträgers ist ein Füllkörper aus einem spritzgegossenen Kunststoff angeordnet, welcher die Innenoberflächen des Profilträgers schubfest miteinander verbindet.

Die WO 2015/159038 A1 beschreibt ein Verfahren zur Herstellung einer großdimensionierten Kunststoffschale, die z. B. für eine Verwendung als Lichtleiter oder als Teil einer Beleuchtungsoptik vorgesehen ist. Bei dem Verfahren wird zur Verringerung der Herstellungsdauer eines schalenförmigen Bauteils zunächst ein erstes Schalenteil hergestellt, welches einen zu umspritzenden Abschnitt mit einer Vielzahl von Rippen aufweist. Diese Rippen dienen einer sicheren Verbindung zu einem zweiten Schaltenteil, welches durch teilweises Umspritzen des ersten Schalenteils hergestellt wird.

Die US 2016/0052564 A1 offenbart einen Hilfsrahmen für ein Kraftfahrzeug, der eine Oberschale und eine Unterschale aufweist, wobei die Unterschale aus einem faserverstärkten Kunststoff hergestellt ist. Die Oberschale weist zur Verstärkung eine Rippenstruktur auf, ist jedoch selbst aus Metall gefertigt.

Die DE 10 2018 202 307 A1 beschreibt einen Lenker für eine Radaufhängung, mit wenigstens einer Aufbau-Anbindungsstelle für einen Fahrzeugaufbau und wenigstens einer Radträger-Anbindungsstelle für einen Radträger, welche an einem sich entlang einer Lenkerebene erstreckenden Lenkerkörper angeordnet sind. Der Lenkerkörper weist einen Basiskörper, welcher aus diskontinuierlich verstärktem Kunststoff geformt ist, sowie eine hiermit stoffschlüssig verbundene, Endlosfasern enthaltende Verstärkung auf. Die Verstärkung ist dabei bezüglich der Lenkerebene auf einen ersten Bereich des Lenkerkörpers beschränkt, während sich der Basiskörper in einen zweiten Bereich erstreckt.

Die DE 10 2013 214 673 A1 offenbart einen radführenden Lenker im Fahrwerk eines Fahrzeugs, dessen Grundstruktur (ohne Anbauteile) vollständig aus einem faserverstärkten thermoplastischen Werkstoff besteht, wobei die Grundstruktur vollumfänglich durch Spritzgießen oder Spritzpressen hergestellt ist. In einer bevorzugten Ausgestaltung besitzt der Lenker keine nennenswerte biegeelastische Eigenschaft, jedoch im Spritzguß- oder Spritzpressprozess ausgebildete Anbindungsstellen. Der thermoplastische Kunststoff des Lenkers kann mit Langfasern und/oder Kurzfasern und/oder Endlosfasern verstärkt sein, wobei als Verstärkungsfasern Karbon-, Glas- oder Aramidfasern zum Einsatz kommen können.

Die DE 10 2013 201 058 A1 beschreibt einen Haltebügel für ein Lager eines Fahrwerks-Stabilisators eines zweispurigen Fahrzeugs, der durch zumindest ein Metallblech oder faserverstärktes Kunststofflaminat und durch thermoplastisch angespritzten faserverstärkten Kunststoff gebildet ist, welcher nicht das aus einem Elastomer geformte Lager bildet. Der faserverstärkte Kunststoff kann dabei in einer Rippenstruktur angespritzt sein. Des Weiteren können bei dem Haltebügel zwei Bleche oder Laminatstrukturen durch den angespritzten Kunststoff voneinander beabstandet in Radialrichtung des Elastomer-Lagers betrachtet hintereinander vorgesehen sein.

Hinsichtlich des technologischen Hintergrunds der vorliegenden Erfindung werden die Dokumente KR 101 393 849 B1, US 2011/189428 A1, DE 10 2013 014 550 A1, WO 2012/167879 A2, EP 3 564 053 A1 und KR 2018 0036365 A genannt, die Bauteile in Metall-Kunststoff-Hybrid-Bauweise oder keine Chassis-Bauteile mit einem Kernteil aus faserverstärktem Kunststoff für Kraftfahrzeuge betreffen.

Die Fertigung von Bauteilen aus Kunststoff im Spritzguss gehört seit vielen Jahren zum Stand der Technik und zählt zu den üblichen Verfahren in der Herstellung von Produkten aus faserverstärkten thermoplastischen Kunststoffen. Bekannt ist dabei insbesondere das sogenannte Dickwandspritzgussverfahren, mit dem sich Wandstärken von bis zu 50 mm realisieren lassen.

Chassis-Bauteile, insbesondere Querlenker, für Kraftfahrzeuge haben häufig komplexe Geometrien. Bei der Auslegung von Chassis-Bauteilen aus faserverstärkten thermoplastischen Kunststoffen für Kraftfahrzeuge wird darauf geachtet, dicke Wandstärken und Materialanhäufungen zu vermeiden. Denn bei zu dicken Wandstärken können beim Spritzguss materialabhängig Einfallstellen, Verformungen und Lunker (Lufttaschen) auftreten. Dadurch wird die Konstruktion von Chassis-Bauteilen, wie beispielsweise dynamisch belasteten Fahrwerksquerlenkern, aus faserverstärkten thermoplastischen Kunststoffen komplizierter, wenn diese Bauteile Vorgaben hinsichtlich Lebensdauerfestigkeit und Knicksteifigkeit erfüllen müssen.

Aufgrund der komplexen Geometrien von Chassis-Bauteilen, insbesondere Querlenkern, lassen sich zumindest bereichsweise relativ dicke Wandstärken von z. B. mehr als 10 mm, insbesondere von mehr als 15 mm, nicht vermeiden. Das Dickwandspritzgussverfahren ist zur Herstellung von Chassis-Bauteilen mit komplexen Geometrien meist unbefriedigend oder sogar ungeeignet, weil dabei die oben genannten Maßstabilitätsmängel, insbesondere Verformungen und Lunker auftreten. Zudem lässt sich mit dem Dickwandspritzgussverfahren kein günstiger Teilepreis bei einer Massenproduktion von Chassis-Bauteilen aus faserverstärkten thermoplastischen Kunststoffen für Kraftfahrzeuge realisieren.

Davon ausgehend liegt der Erfindung die technische Aufgabe zugrunde, ein Chassis-Bauteil der eingangs genannten Art derart weiterzuentwickeln, dass es sich mit hoher Maßstabilität sowie einem günstigen Bauteilpreis hinsichtlich einer Massenproduktion realisieren lässt.

Diese Aufgabe wird durch ein Chassis-Bauteil mit den in Anspruch 1 angegebenen Merkmalen gelöst. Vorteilhafte Ausgestaltungen der Erfindung sind in den Unteransprüchen angegeben.

Bei dem erfindungsgemäßen Chassis-Bauteil kann es sich beispielsweise um einen Fahrwerksquerlenker für ein Kraftfahrzeug handeln. Des Weiteren kann das erfindungsgemäße Chassis-Bauteil auch als Chassis-Hilfsrahmen für ein Kraftfahrzeug oder als Teil eines solchen Hilfsrahmens, insbesondere als Querbrücke eines Chassis-Hilfsrahmens ausgeführt sein.

Das erfindungsgemäße Chassis-Bauteil umfasst ein Kernteil, das wenigstens eine erste Anbindungsstelle und wenigstens eine zweite Anbindungsstelle aufweist, und eine Außenhülle aus Kunststoff, vorzugsweise faserverstärktem Kunststoff, die das Kernteil teilweise oder vollständig umhüllt. Die Anbindungsstellen dienen beispielsweise der Anbindung des Chassis-Bauteils an eine Karosserie und/oder an einen Radträger oder der Anbindung an einen Hilfsrahmen für ein Kraftfahrzeug.

Erfindungsgemäß ist das Kernteil aus faserverstärktem Kunststoff durch Spritzgießen hergestellt und weist eine dreidimensionale Struktur mit einer Vielzahl wandförmiger und/oder stiftförmiger Rippen auf, wobei wenigstens 60%, vorzugsweise wenigstens 80%, besonders bevorzugt wenigstens 95% der Rippen jeweils eine Dicke von maximal 5 mm, vorzugsweise eine Dicke von weniger als 5 mm haben, und wobei die Außenhülle die Rippen umhüllt, indem die Rippen mit Kunststoff der Außenhülle umspritzt und/oder umgossen sind, und wobei das Kernteil einen Langfaseranteil von mindestens 40 Vol.-% aufweist.

Die Außenhülle kann auch als Mantelschicht oder Mantelteil bezeichnet werden.

Durch die erfindungsgemäße Konstruktion (Bauweise) ist es möglich, zunächst das Kernteil und schließlich das Chassis-Bauteil als Ganzes in hoher Maßstabilität sowie mit einem günstigen Bauteilpreis in einer Massenproduktion zu realisieren. Die Erfinder haben erkannt, dass die relativ geringe Dicke der Rippen des Kernteils günstig für die Maßstabilität ist, jedoch zu kritischen Spannungskonzentrationen an den Rippen, insbesondere an Kreuzungs- bzw. Verbindungsstellen der Rippen führt. Diese Spannungskonzentrationen werden erfindungsgemäß durch die die Rippen umhüllende Außenhülle auf ein unkritisches Maß reduziert.

Vorzugsweise haben im Wesentlichen alle Rippen des Kernteils des erfindungsgemäßen Chassis-Bauteils eine Dicke von weniger als 5 mm, beispielsweise eine Dicke, die im Bereich von ca. 0,5 bis 4 mm liegt.

Das Verfahren zum Herstellen des erfindungsgemäßen Chassis-Bauteils ist folglich dadurch gekennzeichnet, dass zunächst das Kernteil durch Spritzgießen hergestellt und nachfolgend das Kernteil mit der Außenhülle versehen wird, indem die Rippen des Kernteils mit Kunststoff, vorzugsweise faserverstärktem Kunststoff umspritzt und/oder umgossen werden.

Anders ausgedrückt besteht die erfindungsgemäße Lösung somit in einer zwei- oder mehrstufigen Hybrid-Spritzgusskonstruktion bzw. einem zwei- oder mehrstufigen Hybrid-Spritzgussverfahren, wobei zunächst eine erste Komponente als Kernteil in Form eines Rippenkörpers aus Kunststoff hergestellt wird, und anschließend eine zweite Komponente als Außenhülle aus Kunststoff in der Weise hergestellt wird, dass die Außenhülle die Rippen des Rippenkörpers dicht anliegend umhüllt. Die Außenhülle ist somit formschlüssig und stoffschlüssig mit dem Kernteil verbunden.

Die Gesamtfertigungszeit des erfindungsgemäßen Chassis-Bauteils kann dabei beispielsweise unter 120 Sekunden liegen.

Mittels der erfindungsmäßen Lösung, insbesondere mittels der erfindungsgemäßen Rippengestaltung, bei der die Rippendicke maximal 5 mm beträgt, können Chassis-Bauteile (z. B. Querlenker) aus thermoplastischem Kunststoff mit variablen Bauteildicken im Bereich von 10 bis 80 mm, vorzugsweise im Bereich von 10 bis 50 mm hergestellt werden.

Abschnitte des erfindungsgemäßen Chassis-Bauteils, die aus Rippen des Kernteils und der die Rippen umhüllenden Außenhülle bestehen, können beispielsweise eine Gesamtdicke aufweisen, die größer als 15 mm, insbesondere größer als 20 mm ist. Die Gesamtdicke solcher Abschnitte kann beispielsweise im Bereich von 10 bis 80 mm, vorzugsweise im Bereich von 10 bis 60 mm, besonders bevorzugt im Bereich von 10 bis 50 mm liegen. Die Gesamtdicke solcher Abschnitt kann somit in dem typischen Wanddickenbereich liegen, welcher sich durch das herkömmliche Dickwandspritzgussverfahren realisieren lässt.

Eine vorteilhafte Ausgestaltung der Erfindung ist dadurch gekennzeichnet, dass die Rippen des Kernteils eine Dicke im Bereich von ca. 0,5 bis 5 mm, vorzugsweise im Bereich von ca. 0,5 bis 4 mm, insbesondere im Bereich von ca. 0,5 bis 3,5 mm aufweisen. Diese Ausgestaltung trägt zu einer hohen Maßstabilität des Kernteils und damit zu einer hohen Maßstabilität des damit hergestellten Chassis-Bauteils bei. Die erzielbare Maßstabilität des Kernteils.(Rippenkörpers) lässt sich in der Regel mit abnehmender Dicke der Rippen steigern.

Das Höhen-Dicken-Verhältnis der Rippen liegt vorzugsweise im Bereich von 3:1 bis 5:1, beispielsweise überwiegend bei ca. 4:1.

Eine weitere vorteilhafte Ausgestaltung der Erfindung ist dadurch gekennzeichnet, dass das Kernteil aus thermoplastischem Kunststoff, vorzugsweise aus Polyamid, besonders bevorzugt aus Polyamid 6.6 (Nylon) hergestellt ist bzw. wird. Thermoplastischer Kunststoff, insbesondere Polyamid lässt sich gut verarbeiten. Polyamide verleihen dem Kernteil bzw. Chassis-Bauteil eine hervorragende Festigkeit, Steifigkeit und Zähigkeit. Zudem zeichnen sich Polyamide durch eine gute Beständigkeit gegenüber organischen Lösungsmitteln, insbesondere gegenüber Schmier- und Kraftstoffen bei Temperaturen bis über 150°C aus.

Eine weitere Ausgestaltung der Erfindung sieht vor, dass das Kernteil einen Langfaseranteil von mindestens 50 Vol.-% aufweist. Durch die Faserverstärkung weist das Kernteil eine hohe Festigkeit, insbesondere hohe Biegefestigkeit auf.

Die in dem Kunststoff des Kernteils enthaltenen Fasern bzw. Langfasern sind vorzugsweise anorganische Fasern bzw. anorganische Langfasern, beispielsweise Glasfasern und/oder Kohlenstofffasern und/oder Keramikfasern.

Hinsichtlich eines möglichst geringen Bauteilgewichts bei ausreichend hoher Bauteilstabilität, insbesondere Biegefestigkeit, sieht eine weitere Ausgestaltung der Erfindung vor, dass das Kernteil ringförmige Abschnitte aufweist, von denen mindestens zwei benachbarte Abschnitte einen gemeinsamen Teilabschnitt haben. Vorzugsweise sind dabei zwei oder mehrere dieser ringförmigen Abschnitte hintereinander ausgebildet, wobei der jeweilige gemeinsame Teilabschnitt der benachbarten Abschnitte nach Art einer Querstrebe oder Traverse längliche Teilabschnitte des Kernteils miteinander verbindet. Die durch den mindestens einen gemeinsamen Teilabschnitt (Querstrebe) miteinander verbundenen länglichen Teilabschnitte des Kernteils verlaufen vorzugsweise entlang und mit geringem Abstand von Außenkanten oder Außenrändern des Chassis-Bauteils. Der Abstand der länglichen Teilabschnitte des Kernteils von den Außenkanten oder Außenrändern des Chassis-Bauteils wird durch die Außenhülle definiert und kann beispielsweise im Bereich von ca. 1 bis 10 mm, insbesondere im Bereich von ca. 2 bis 8 mm liegen.

Das Kernteil kann auch als innere Stützstruktur des Chassis-Bauteils bezeichnet werden. Die Außenhülle kann dagegen auch als äußere Stützstruktur des Chassis-Bauteils bezeichnet werden.

Eine weitere vorteilhafte Ausgestaltung der Erfindung ist dadurch gekennzeichnet, dass die ringförmigen Abschnitte des Kernteils unterschiedlich große Innenweiten aufweisen. Hierdurch kann das Kernteil vorteilhaft an die geometrischen Abmessungen des herzustellenden Chassis-Bauteils angepasst werden, um bei ausreichend hoher Bauteilstabilität, insbesondere Biegefestigkeit, ein möglichst geringes Bauteilgewichts zu realisieren.

Nach einer weiteren vorteilhaften Ausgestaltung der Erfindung weist das Kernteil mindestens einen länglichen oder speichenförmigen Abschnitt auf, wobei in dem Fall, in welchem das Kernteil eine dreidimensionale Struktur mit einer Vielzahl wandförmiger Rippen und optional stiftförmiger Rippen aufweist, eine Vielzahl der wandförmigen Rippen schräg oder geneigt zur Mittellinie des länglichen oder speichenförmigen Abschnitts verläuft. Bei diesem länglichen oder speichenförmigen Abschnitt des Kernteils kann es sich insbesondere um einen der zuvor genannten länglichen Teilabschnitte des Kernteils handeln, die durch den mindestens einen gemeinsamen Teilabschnitt (Querstrebe) miteinander verbunden sind. Durch diese Ausgestaltung lässt sich eine besonders hohe Biegefestigkeit des Kernteils bei geringem Gewicht erzielen. Zugleich kann durch diese Ausgestaltung eine hohe Gesamtkontaktfläche zwischen Kernteil und Außenhülle realisiert werden. Günstig ist hierfür insbesondere eine Ausgestaltung, bei welcher das Kernteil eine dreidimensionale Struktur mit einer Vielzahl wandförmiger Rippen und optional stiftförmiger Rippen aufweist und eine Vielzahl der wandförmigen Rippen im Wesentlichen parallel zueinander verläuft.

Eine weitere vorteilhafte Ausgestaltung der Erfindung ist dadurch gekennzeichnet, dass das Kernteil einen stegförmigen Abschnitt aufweist, wobei jeweils eine Vielzahl der Rippen beidseitig des stegförmigen Abschnittes ausgebildet ist. Dieser stegförmige Abschnitt mit den beidseitig ausgebildeten Rippen kann insbesondere in dem oben genannten länglichen oder speichenförmigen Abschnitt und/oder in dem oben genannten gemeinsamen Teilabschnitt (Querstrebe) des Kernteils ausgebildet sein. Diese Ausgestaltung verleiht dem Kernteil eine besonders hohe Biegefestigkeit bei geringem Gewicht. Außerdem kann durch diese Ausgestaltung eine hohe Gesamtkontaktfläche zwischen Kernteil und Außenhülle realisiert werden.

Nach einer weiteren vorteilhaften Ausgestaltung der Erfindung ist vorgesehen, dass wenigstens eine der Anbindungsstellen des Kernteils als buchsenförmige Anbindungsstelle oder in Form eines Lagerauges einstückig mit dem Kernteil ausgebildet ist. Diese Ausgestaltung verleiht dem Chassis-Bauteil bei geringem Gewicht eine hohe Stabilität, insbesondere eine hohe Biegefestigkeit, und bietet die Möglichkeit einer Reduktion der Herstellungskosten des Chassis-Bauteils.

Eine weitere Ausgestaltung der Erfindung sieht vor, dass das Chassis-Bauteil ein Einlegeteil, vorzugsweise aus Metall, z. B. Stahl, aufweist, das im Bereich einer der Anbindungsstellen angeordnet ist, wobei das Einlegeteil stoffschlüssig und/oder formschlüssig mit dem Kernteil und/oder der Außenhülle verbunden ist. Hierdurch können das Kraftaufnahmevermögen und die Dauerfestigkeit an der betreffenden Anbindungsstelle optimiert werden. Das Einlegeteil weist vorzugsweise einen lageraugenförmigen Abschnitt und/oder einen laschenförmigen Abschnitt auf. Durch den lageraugenförmigen Abschnitt lässt sich eine vorteilhafte Gelenkanbindung realisieren, während der laschenförmige Abschnitt zu einer besonders stabilen Verbindung des Einlegeteils mit dem Kernteil des Chassis-Bauteils beiträgt. Zur Erzielung einer besonders stabilen Verbindung von Einlegeteil und Kernteil des Chassis-Bauteils sieht eine weitere Ausgestaltung vor, dass das Einlegeteil eine Vielzahl von Erhebungen und/oder Ausnehmungen aufweist. Hierdurch wird die Verbindung von Einlegeteil und Kernteil durch eine verbesserte formschlüssige Verbindung optimiert, da sich das Material des Kernteils mit den Erhebungen und/oder Ausnehmungen des Einlegeteils verankert.

Eine weitere vorteilhafte Ausgestaltung der Erfindung ist dadurch gekennzeichnet, dass die Außenhülle die Rippen des Kernteils derart umhüllt, dass ein oder mehrere Zwischenräume, der bzw. die durch benachbarte Rippen der Rippen begrenzt ist/sind, durch das Material der Außenhülle vollständig gefüllt ist/sind. Vorzugsweise sind im Wesentlichen alle Zwischenräume, die durch benachbarte Rippen der Rippen begrenzt sind, durch das Material der Außenhülle vollständig gefüllt. Hierdurch kann die Oberfläche des Chassis-Bauteils weitgehend geglättet ausgeführt werden, wodurch einem Anhaften von grobem Schmutz an durch die Rippen verursachten Vorsprüngen entgegengewirkt bzw. eine Reinigung des Chassis-Bauteils vereinfacht wird.

Nach einer weiteren vorteilhaften Ausgestaltung der Erfindung begrenzt die Außenhülle des Chassis-Bauteils im Bereich mindestens eines der ringförmigen Abschnitte des Kernteils eine einseitig ausgebildete Vertiefung oder beidseitig gegenüberliegende Vertiefungen. Diese Ausgestaltung ist für eine Reduzierung des Gewichts des Chassis-Bauteils von Vorteil. Zu diesem Zweck kann im Bereich mindestens eines der ringförmigen Abschnitte des Kernteils auch eine Durchgangsöffnung in der Außenhülle bzw. dem Chassis-Bauteil ausgebildet sein.

Eine weitere Ausgestaltung der Erfindung sieht vor, dass die Außenhülle aus thermoplastischem Kunststoff, vorzugsweise aus Polyamid, besonders bevorzugt aus PA 6.6 (Nylon) hergestellt ist, wobei der Kunststoff vorzugsweise anorganische Fasern, besonders bevorzugt anorganische Langfasern, beispielsweise Kohlenstofffasern und/oder Glasfasern und/oder Keramikfasern enthält. Die oben mit Bezug auf das Kernteil genannten Vorteile von Polyamid, insbesondere dessen gute Beständigkeit gegenüber Schmier- und Kraftstoffen bei Temperaturen bis über 150°C, ergeben sich bei dieser Ausgestaltung auch für die Außenhülle. Die bereits hervorragende Steifigkeit von Polyamid wird durch die Beimischung von anorganischen Fasern gesteigert. Zugleich kann hierdurch das Gewicht des Chassis-Bauteils reduziert werden. Der Anteil der Fasern im Kunststoff der Außenhülle kann beispielsweise im Bereich von 20 bis 60 Vol.-%, insbesondere im Bereich von 30 bis 50 Vol.-% des Materials der Außenhülle liegen.

Unter Langfasern werden im Rahmen der vorliegenden Erfindung Fasern, insbesondere anorganische Fasern verstanden, deren Länge im Bereich von 1 bis 50 mm, vorzugsweise im Bereich von ca. 5 bis 20 mm, besonders bevorzugt im Bereich von ca. 7 bis 15 mm liegt. Beispielsweise haben mindestens 60 %, vorzugsweise mindestens 75 % der Fasern, die im Kunststoff des Kernteils oder im Kunststoff der Außenhülle enthalten sind, eine Länge im Bereich von 8 bis 12 mm.

Nachfolgend wird die Erfindung anhand einer mehrere Ausführungsbeispiele darstellenden Zeichnung näher erläutert. Es zeigen.
- Fig. 1: einen Abschnitt eines Chassis-Bauteils für ein Kraftfahrzeug in Form eines Fahrwerksquerlenkers, in einer perspektivischen Darstellung;
- Fig. 2: einen anderen Abschnitt des Chassis-Bauteils aus Fig. 1, in einer perspektivischen Darstellung;
- Fig. 3: das Chassis-Bauteil aus den Figuren 1 und 2, in einer perspektivischen Explosionsdarstellung;
- Fig. 4: einen Randabschnitt eines erfindungsgemäßen Chassis-Bauteils, in einer perspektivischen Darstellung;
- Fig. 5: einen Abschnitt des Kernteils eines erfindungsgemäßen Chassis-Bauteils mit einer Rippenstruktur gemäß einem weiteren Ausführungsbeispiel, in einer perspektivischen Darstellung;
- Fig. 6: einen Abschnitt des Kernteils eines erfindungsgemäßen Chassis-Bauteils mit einer Rippenstruktur gemäß noch einem weiteren Ausführungsbeispiel, in einer perspektivischen Darstellung; und
- Fig. 7: einen Abschnitt des Kernteils eines erfindungsgemäßen Chassis-Bauteils mit einer Rippenstruktur gemäß noch einem weiteren Ausführungsbeispiel, in einer perspektivischen Darstellung.

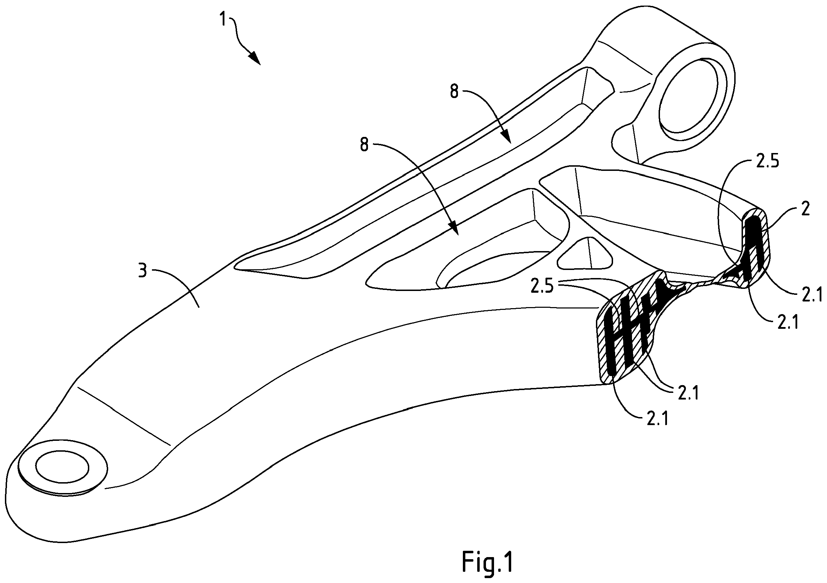

Als Beispiel für ein erfindungsgemäßes Chassis-Bauteil ist in den Figuren 1 bis 3 ein Fahrwerksquerlenker 1 gezeigt. Das Chassis-Bauteil (Fahrwerksquerlenker) ist aus einem Kernteil 2 und einer das Kernteil umhüllenden Außenhülle 3 aus Kunststoff, vorzugsweise faserverstärktem Kunststoff, gebildet. Das Kernteil 2 kann auch als innere Stützstruktur des Chassis-Bauteils bezeichnet werden.

Das Kernteil 2 des Fahrwerksquerlenkers 1 weist Anbindungsstellen 4, 5, 6 auf, die der gelenkigen Anbindung des Fahrwerksquerlenkers an einer Karosserie und einem Radträger dienen. In die karosserieseitigen Anbindungsstellen 4, 5 werden hierzu beispielsweise eine Gelenkbuchse (nicht gezeigt) bzw. ein Traggelenk (nicht gezeigt) eingesetzt. In die radträgerseitige Anbindungsstelle 6 wird ebenfalls ein Traggelenk (nicht gezeigt) eingesetzt. Die Traggelenke sind mit Kugelzapfen oder Kugelgelenken versehen.

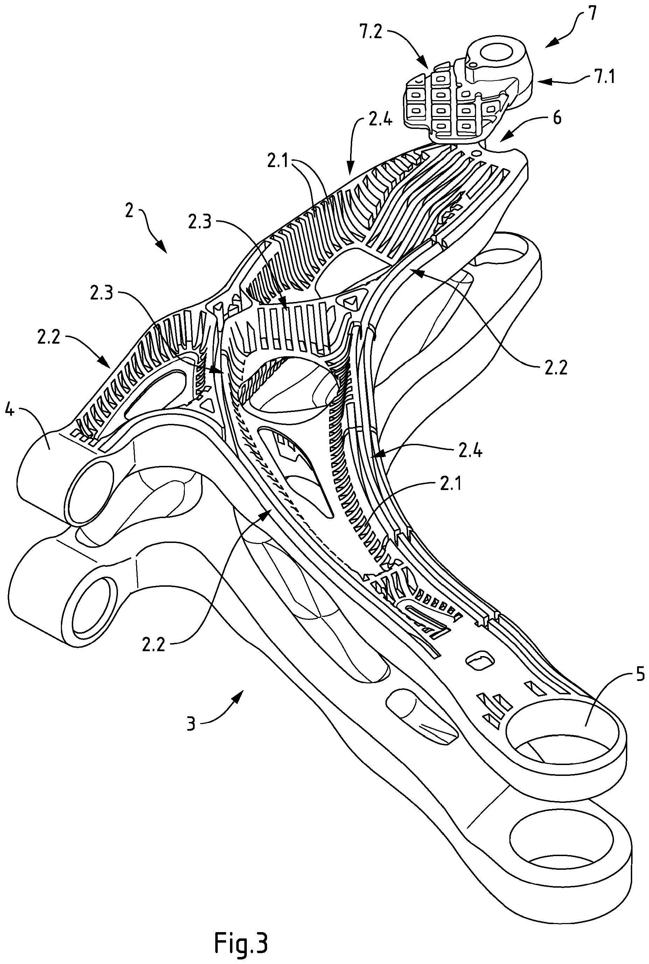

Die der Gelenkbuchse zugeordnete Anbindungsstelle 4 ist buchsenförmig ausgebildet, während die den Traggelenken zugeordneten Anbindungsstellen 5, 6 in Form von Lageraugen ausgebildet sind. Die Anbindungsstellen 4, 5, 6 sind jeweils einstückig mit dem Kernteil 2 ausgebildet (vgl. Fig. 3).

Das Kernteil 2 des Fahrwerksquerlenkers 1 ist ebenfalls aus Kunststoff hergestellt. Es weist eine dreidimensionale Struktur mit einer Vielzahl von Rippen 2.1, beispielsweise wandförmige Rippen 2.1 auf, wobei wenigstens 60%, vorzugsweise wenigstens 80%, insbesondere wenigstens 95% der Rippen 2.1 jeweils eine Dicke (Wanddicke) von maximal 5 mm haben. Besonders bevorzugt haben im Wesentlichen alle Rippen 2.1 des Kernteils 2 eine Dicke (Wanddicke) kleiner/gleich 5 mm. Beispielsweise haben die Rippen 2.1 jeweils eine Dicke im Bereich von 0,5 bis 5 mm, vorzugsweise im Bereich von 0,5 bis 4 mm.

Das Höhen-Dicken-Verhältnis der Rippen 2.1 liegt beispielsweise im Bereich von 3:1 bis 5:1, insbesondere überwiegend bei ca. 4:1.

Das Kernteil 2 wird aus thermoplastischem Kunststoff durch Spritzgießen hergestellt. Bei dem Kunststoff handelt es sich vorzugsweise um Polyamid, z. B. Polyamid 6.6 mit der Handelsbezeichnung "Nylon". Der Kunststoff, aus dem das Kernteil 2 hergestellt wird, ist vorzugsweise faserverstärkter Kunststoff, insbesondere faserverstärktes Polyamid. Die in dem Kunststoff des Kernteils 2 enthaltenen Fasern sind vorzugsweise anorganische Langfasern, beispielsweise Glasfasern und/oder Kohlenstofffasern. Der Anteil der Langfasern im Kunststoff des Kernteils 2 kann beispielsweise ca. 60 Vol.-% des Materials des Kernteils 2 betragen.

Das Kernteil 2 hat eine netzartige Struktur mit ringförmigen Abschnitten 2.2, von denen benachbarte Abschnitte einen gemeinsamen Teilabschnitt 2.3 aufweisen. Der gemeinsame Teilabschnitt 2.3 verbindet äußere Abschnitte 2.4 des Kernteils 2 und entspricht oder ähnelt einer Querstrebe. Die äußeren Abschnitte 2.4 des Kernteils sind länglich oder speichenförmig ausgebildet; sie können auch als längliche oder speichenförmige Abschnitte 2.4 des Kernteils bezeichnet werden. Die geometrische Form der äußeren Abschnitte 2.4 des Kernteils 2 ist im Wesentlichen an die gewünschte Kontur des Chassis-Bauteils bzw. Fahrwerksquerlenkers 1 angepasst.

Die ringförmigen Abschnitte 2.2 sind vorzugsweise verschieden groß ausgebildet. Sie weisen unterschiedlich große Innenweiten auf. Die Lage der gemeinsamen Teilabschnitte (Querstreben) 2.3 der ringförmigen Abschnitte 2.2 ist so gewählt, dass das Kernteil 2 bei geringem Gewicht eine hohe Stabilität, insbesondere Biegesteifigkeit aufweist.

In Fig. 3 ist zu sehen, dass das Kernteil 2 mehrere längliche oder speichenförmige Abschnitte 2.4 und Teilabschnitte (Querstreben) 2.3 aufweist, wobei eine Vielzahl der wandförmigen Rippen 2.1 schräg oder geneigt zur Mittellinie des betreffenden länglichen oder speichenförmigen Abschnitts 2.4 bzw. Teilabschnitts 2.3 verläuft.

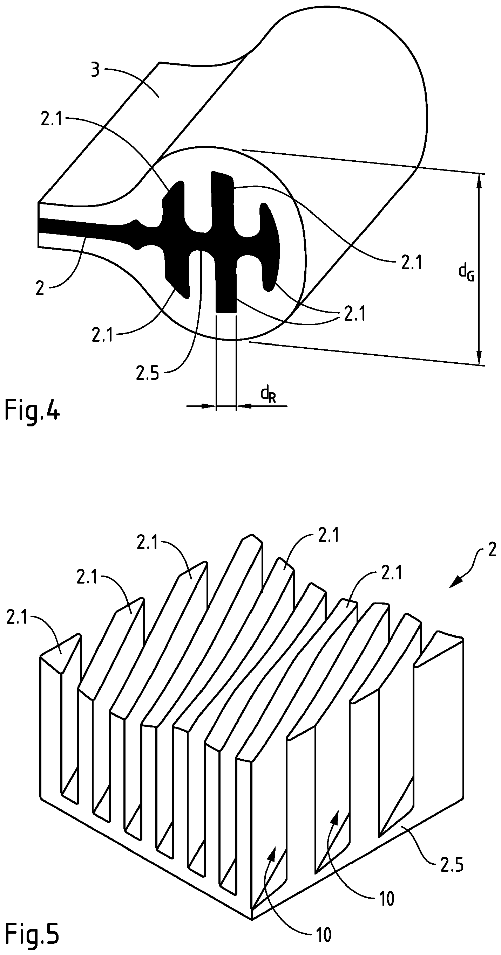

Der jeweilige äußere Abschnitt 2.4 sowie der nach Art einer Querstrebe ausgebildete Teilabschnitt 2.3 des Kernteils 2 umfasst vorzugsweise einen stegförmigen Abschnitt 2.5, wobei eine Vielzahl der Rippen 2.1 beidseitig des stegförmigen Abschnitts 2.5 ausgebildet ist. Eine Vielzahl der wandförmigen Rippen 2.1 verläuft dabei im Wesentlichen parallel zueinander (vgl. auch Fig. 5).

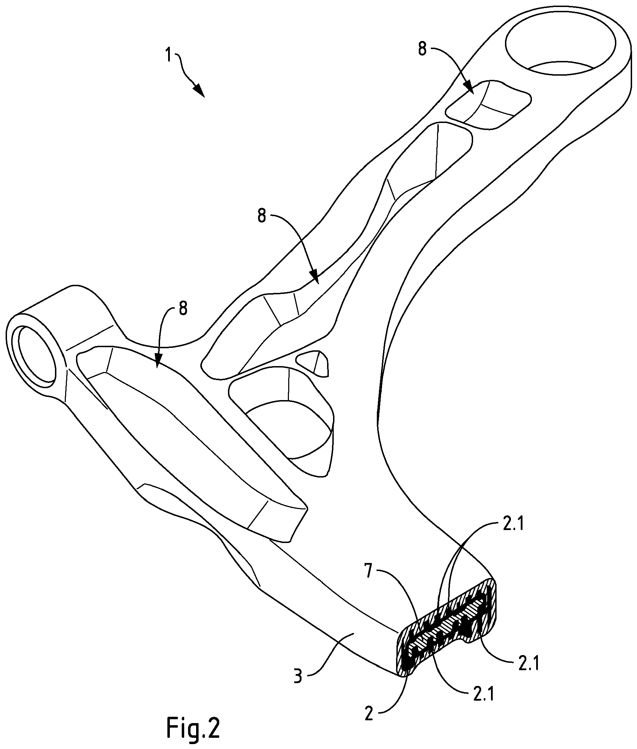

Das erfindungsgemäße Chassis-Bauteil kann im Bereich einer der Anbindungsstellen, beispielsweise an der radträgerseitigen Anbindungsstelle 6, ein Einlegeteil 7 aufweisen. Das optionale Einlegeteil 7 ist vorzugsweise aus Metall, beispielsweise aus einer Stahl- oder Aluminiumlegierung gefertigt. Es ist insbesondere mit dem Kernteil 2 stoffschlüssig verbunden (vgl. Fig. 2). In dem gezeigten Ausführungsbeispiel weist das Einlegeteil 7 einen lageraugenförmigen Abschnitt 7.1 und einen laschenförmigen Abschnitt 7.2 auf. In Fig. 2 ist ein Querschnitt des Fahrwerksquerlenkers 1 im Bereich des laschenförmigen Abschnitts 7.2 des Einlegeteils 7 gezeigt. In den Figuren 2 und 3 ist zu erkennen, dass das Einlegeteil 7, beispielsweise sein laschenförmiger Abschnitt 7.2 eine Vielzahl von Erhebungen und Ausnehmungen aufweist. Beim Herstellen des Kernteils 2 durch Spritzgießen verankert sich der Kunststoff des Kernteils 2 formschlüssig an den Erhebungen und Ausnehmungen des Einlegeteils 7.

Das Kernteil 2 wird in einem eine erste Kavität aufweisenden Formwerkzeug hergestellt. In einem nachfolgenden Herstellungsschritt wird das Kernteil 2 mit dem optionalen Einlegeteil 7 mit der Außenhülle 3 versehen, indem die Rippen 2.1 des Kernteils 2 mit Kunststoff, vorzugsweise faserverstärktem Kunststoff umspritzt und/oder umgossen werden. Hierzu wird das Kernteil 2 in einem eine zweite Kavität aufweisenden Formwerkzeug positioniert. Die Rippen 2.1 des Kernteils 2 werden dabei derart mit dem Kunststoff der Außenhülle 3 umspritzt oder umgossen, dass zunächst vorhandene Zwischenräume, welche durch benachbarte Rippen 2.1 der Rippen begrenzt sind, durch das Material der Außenhülle 3 vollständig gefüllt werden (vgl. Figuren 1 und 2).

Durch die vorzugsweise durch Spritzgießen erzeugte Außenhülle 3 weist das Chassis-Bauteil eine im Wesentlichen spaltfreie, weitgehend glatt ausgeführte Oberfläche auf. Die Außenhülle 3 definiert innerhalb der ringförmigen Abschnitte 2.2 des Kernteils 2 ausgebildete Vertiefungen 8. Die Vertiefungen 8 sind als einseitig ausgebildete Vertiefung oder als beidseitig, gegenüberliegende Vertiefungen ausgebildet sein. Zudem ist in der Außenhülle 3 bzw. im Chassis-Bauteil eine Durchgangsöffnung 9 im Bereich eines der ringförmigen Abschnitte 2.2 des Kernteils 2 ausgebildet.

Bei dem zur Herstellung der Außenhülle 3 verwendeten Kunststoff handelt es sich um thermoplastischen Kunststoff, vorzugsweise Polyamid, besonders bevorzugt Polyamid 6.6 (Nylon), wobei der Kunststoff vorzugsweise anorganische Langfasern, beispielsweise Kohlenstofffasern und/oder Glasfasern und/oder Keramikfasern enthält. Der Anteil der Langfasern im Kunststoff der Außenhülle 3 kann beispielsweise ca. 40 Vol.-% des Materials der Außenhülle 3 betragen. Die Außenhülle 3 kann auch als äußere Stützstruktur des Chassis-Bauteils bezeichnet werden.

In den Figuren 4 bis 7 sind verschiedene Rippenstrukturen des Kernteils 2 dargestellt.

Fig. 4 zeigt schematisch einen Randabschnitt eines erfindungsgemäßen Chassis-Bauteils (z. B. Querlenker) mit einem wandförmige Rippen 2.1 aufweisenden Kernteil, das aus thermoplastischem Kunststoff, vorzugsweise Polyamid, z.B. Nylon, hergestellt und anschließend mit faserverstärktem, thermoplastischen Kunststoff zur Erzeugung einer Außenhülle 3 umspritzt oder umgossen ist. Die Rippen 2.1 sind beidseitig eines stegförmigen Abschnittes 2.5 des Kernteils 2 ausgebildet. Der in Fig. 4 gezeigte Abschnitt des Kernteils 2 ist ein äußerer, länglicher Abschnitt 2.4 des Kernteils 2. Die Dicke (d_{R}) einer einzelnen wandförmigen Rippe 2.1 sowie die Gesamtdicke (d_{G}) des Randabschnittes des schematisch angedeuteten Chassis-Bauteils sind durch Bemaßungslinien angezeigt. Die Rippen 2.1 haben eine maximale Dicke von beispielsweise 5 mm, während die Gesamtdicke des durch die Außenhülle 3 vervollständigten Randabschnitts des Chassis-Bauteils beispielsweise ca. 50 mm beträgt. Die Rippen 2.1 können dabei unterschiedlich ausgebildet, insbesondere unterschiedlich dick und/oder unterschiedlich hoch bzw. tief ausgebildet sein. Beispielsweise hat die äußerste Rippe 2.1' eine geringere Dicke und eine geringere Höhe sowie Tiefe als ihre unmittelbar benachbarte Rippe 2.1". Weiter ist zu erkennen, dass die äußerste Rippe 2.1' ein konvex ausgebildetes Außenprofil aufweist.

Bei dem in Fig. 5 gezeigten Ausführungsbeispiel sind die Rippen 2.1 wandförmig ausgebildet. Ihre jeweilige Wanddicke beträgt maximal 5 mm, vorzugsweise deutlich weniger als 5 mm. Die Rippen 2.1 verlaufen im Wesentlichen parallel zueinander und begrenzen, vor dem Anspritzen/Angießen der Außenhülle 3, spaltförmige Zwischenräume 10.

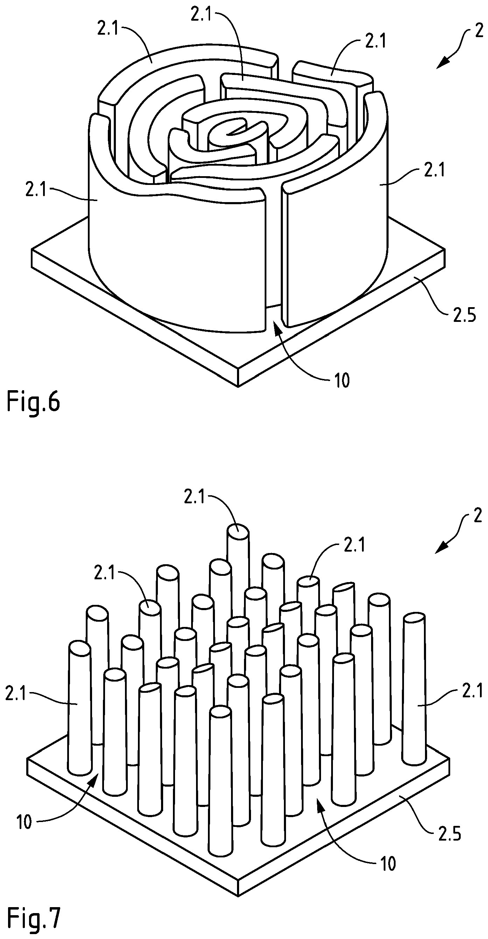

In Fig. 6 ist ein Ausführungsbeispiel gezeigt, bei dem die Rippen 2.1 des Kernteils 2 ebenfalls wandförmig ausgebildet sind. Im Unterschied zu dem in Fig. 5 gezeigten Ausführungsbeispiel sind die wandförmigen Rippen 2.1 in Fig. 6 jedoch zudem bogenförmig ausgebildet. Es ist zu erkennen, das eine zentrale, im Querschnitt U- oder C-förmige Rippe 2.1 von zwei Rippen 2.1 umgeben ist, die zueinander beabstandet und im Querschnitt betrachtet ebenfalls U- oder C-förmig ausgebildet sind. Diese beiden Rippen 2.1 sind nach außen durch drei weitere, zueinander beabstandete, bogenförmige Rippen 2.1 umgeben, welche wiederum durch vier weitere, zueinander beabstandete, bogenförmige Rippen 2.1 umgeben sind. Die in Fig. 6 gezeigte Rippenstruktur ähnelt im Querschnitt bzw. in Draufsicht betrachtet der Struktur einer Blumenblüte.

Bei dem in Fig. 7 gezeigten Ausführungsbeispiel sind die Rippen 2.1 des Kernteils 2 stiftförmig ausgebildet. Diese Rippenstruktur ähnelt der Struktur eines sogenannten Nagelbretts oder einer Nadelbürste. Auch die Dicke der stiftförmigen Rippen 2.1 beträgt maximal 5 mm, vorzugsweise deutlich weniger als 5 mm.

In den in den Figuren 5 bis 7 dargestellten Ausführungsbeispielen von Kernteilen 2 eines erfindungsgemäßen Chassis-Bauteils stehen die Rippen 2.1 einseitig von einem stegförmigen Abschnitt des Kernteils ab. Es liegt jedoch auch im Rahmen der vorliegenden Erfindung, dass die Rippen 2.1 beidseitig des stegförmigen Abschnittes 2.5 ausgebildet sind bzw. beidseitig davon abstehen (vgl. Fig. 4).

Die Zwischenräume 10 zwischen den Rippen 2.1 werden nachfolgend beim Überspritzen des Kernteils 2 mit dem Material der Außenhülle 3 im Wesentlichen vollständig gefüllt. An dem fertigen Chassis-Bauteil sind die einzelnen Rippen 2.1 als solche von außen vorzugsweise nicht sichtbar.

Die Ausführung der Erfindung ist nicht auf die in der Zeichnung dargestellten Ausführungsbeispiele beschränkt. Vielmehr sind zahlreiche Varianten denkbar, die auch bei von den gezeigten Beispielen abweichender Gestaltung von der in den beigefügten Ansprüchen angegebenen Erfindung Gebrauch machen. So liegt es beispielsweise auch im Rahmen der Erfindung, verschiedene der hier offenbarten Rippenstrukturen, z. B. zwei oder mehr der in den Figuren 4 bis 7 gezeigten Rippenstrukturen miteinander kombiniert an dem Kernteil 2 des Chassis-Bauteils auszubilden. Ferner kann das erfindungsgemäße Chassis-Bauteil zum Beispiel auch als Chassis-Hilfsrahmen oder als Teil eines solchen Hilfsrahmens, insbesondere als Querbrücke eines Chassis-Hilfsrahmens ausgeführt werden.

## Patentansprüche

1. Chassis-Bauteil für ein Kraftfahrzeug, insbesondere Querlenker (1), wobei das Chassis-Bauteil ein Kernteil (2) aufweist, das wenigstens eine erste Anbindungsstelle (4) und wenigstens eine zweite Anbindungsstelle (5, 6) aufweist, und mit einer das Kernteil (2) teilweise oder vollständig umhüllenden Außenhülle (3) aus Kunststoff, vorzugsweise faserverstärktem Kunststoff, wobei das Kernteil (2) aus faserverstärktem Kunststoff durch Spritzgießen hergestellt ist,
**dadurch gekennzeichnet, dass** das Kernteil (2) eine dreidimensionale Struktur mit einer Vielzahl wandförmiger und/oder stiftförmiger Rippen (2.1) aufweist, wobei wenigstens 60%, vorzugsweise wenigstens 80%, besonders bevorzugt wenigstens 95% der Rippen (2.1) jeweils eine Dicke von maximal 5 mm haben, wobei die Außenhülle (3) die Rippen (2.1) umhüllt, indem die Rippen (2.1) mit Kunststoff der Außenhülle (3) umspritzt und/oder umgossen sind, und wobei das Kernteil (2) einen Langfaseranteil von mindestens 40 Vol.-% aufweist.

2. Chassis-Bauteil nach Anspruch 1, **dadurch gekennzeichnet, dass** die Rippen (2.1) eine Dicke im Bereich von 0,5 bis 5 mm, vorzugsweise im Bereich von 0,5 bis 4 mm haben.

3. Chassis-Bauteil nach Anspruch 1 oder 2, **dadurch gekennzeichnet, dass** die Rippen (2.1) ein Höhen-Dicken-Verhältnis im Bereich von 3:1 bis 5:1 haben.

4. Chassis-Bauteil nach einem der Ansprüche 1 bis 3, **dadurch gekennzeichnet, dass** das Kernteil (2) aus thermoplastischem Kunststoff, vorzugsweise aus Polyamid, besonders bevorzugt aus Polyamid 6.6 hergestellt ist.

5. Chassis-Bauteil nach einem der Ansprüche 1 bis 4, **dadurch gekennzeichnet, dass** das Kernteil (2) einen Langfaseranteil von mindestens 50 Vol.-% aufweist.

6. Chassis-Bauteil nach einem der Ansprüche 1 bis 5, **dadurch gekennzeichnet, dass** das Kernteil (2) ringförmige Abschnitte (2.2) aufweist, von denen mindestens zwei benachbarte Abschnitte einen gemeinsamen Teilabschnitt (2.3) haben, wobei die ringförmigen Abschnitte (2.2) vorzugsweise unterschiedlich große Innenweiten aufweisen.

7. Chassis-Bauteil nach einem der Ansprüche 1 bis 6, **dadurch gekennzeichnet, dass** das Kernteil (2) einen länglichen oder speichenförmigen Abschnitt (2.4) aufweist, wobei in dem Fall, in welchem das Kernteil (2) eine dreidimensionale Struktur mit einer Vielzahl wandförmiger Rippen (2.1) und optional stiftförmiger Rippen (2.1) aufweist, eine Vielzahl der wandförmigen Rippen (2.1) schräg oder geneigt zur Mittellinie des länglichen oder speichenförmigen Abschnitts (2.4) verläuft.

8. Chassis-Bauteil nach einem der Ansprüche 1 bis 7, **dadurch gekennzeichnet, dass** in dem Fall, in welchem das Kernteil (2) eine dreidimensionale Struktur mit einer Vielzahl wandförmiger Rippen (2.1) und optional stiftförmiger Rippen (2.1) aufweist, eine Vielzahl der wandförmigen Rippen (2.1) im Wesentlichen parallel zueinander verläuft.

9. Chassis-Bauteil nach einem der Ansprüche 1 bis 8, **dadurch gekennzeichnet, dass** das Kernteil (2) einen stegförmigen Abschnitt (2.5) aufweist, wobei jeweils eine Vielzahl der Rippen (2.1) beidseitig des stegförmigen Abschnitts (2.5) ausgebildet ist.

10. Chassis-Bauteil nach einem der Ansprüche 1 bis 9, **dadurch gekennzeichnet, dass** wenigstens eine der Anbindungsstellen (4, 5, 6) als buchsenförmige Anbindungsstelle (4) oder in Form eines Lagerauges einstückig mit dem Kernteil (2) ausgebildet ist.

11. Chassis-Bauteil nach einem der Ansprüche 1 bis 10, **gekennzeichnet durch** ein Einlegeteil (7), vorzugsweise aus Metall, das im Bereich einer der Anbindungsstellen (4, 5, 6) angeordnet ist, wobei das Einlegeteil (7) stoffschlüssig und/oder formschlüssig mit dem Kernteil (2) und/oder der Außenhülle (3) verbunden ist.

12. Chassis-Bauteil nach Anspruch 11, **dadurch gekennzeichnet, dass** das Einlegeteil (7) einen lageraugenförmigen Abschnitt (7.1) und/oder einen laschenförmigen Abschnitt (7.2) aufweist.

13. Chassis-Bauteil nach einem der Ansprüche 1 bis 12, **dadurch gekennzeichnet, dass** die Außenhülle (3) die Rippen (2.1) derart umhüllt, dass ein oder mehrere Zwischenräume (10), der/die durch benachbarte Rippen der Rippen (2.1) begrenzt ist/sind, durch das Material der Außenhülle (3) vollständig gefüllt ist/sind.

14. Chassis-Bauteil nach einem der Ansprüche 1 bis 13, **dadurch gekennzeichnet, dass** die Außenhülle (3) aus thermoplastischem Kunststoff, vorzugsweise aus Polyamid, besonders bevorzugt aus Polyamid 6.6 hergestellt ist, wobei der Kunststoff vorzugsweise anorganische Fasern, besonders bevorzugt anorganische Langfasern, beispielsweise Kohlenstofffasern und/oder Glasfasern und/oder Keramikfasern enthält.

## Claims

1. Chassis component for a motor vehicle, in particular transverse control arm (1), the chassis component having a core part (2) which has at least one first connection point (4) and at least one second connection point (5, 6), and having an outer sheathing (3) of plastic, preferably fiber-reinforced plastic, which partially or completely encloses the core part (2),
wherein the core part (2) is made of fiber-reinforced plastic by injection molding, **characterized in that** the core part (2) has a three-dimensional structure with a plurality of wall-shaped and/or pin-shaped ribs (2.1), at least 60%, preferably at least 80%, particularly preferably at least 95% of the ribs (2. 1) each have a thickness of at most 5 mm, wherein the outer shell (3) encloses the ribs (2.1) **in that** the ribs (2.1) are extrusion-coated and/or moulded in with plastic of the outer sheathing (3), and wherein the core part (2) has a long fiber content of at least 40 % by volume.

2. Chassis component according to claim 1, **characterized in that** the ribs (2.1) have a thickness in the range from 0.5 to 5 mm, preferably in the range from 0.5 to 4 mm.

3. Chassis component according to claim 1 or 2, **characterized in that** the ribs (2.1) have a height-to-thickness ratio in the range from 3:1 to 5:1.

4. Chassis component according to any one of claims 1 to 3, **characterized in that** the core part (2) is made of thermoplastic, preferably of polyamide, particularly preferably of polyamide 6.6.

5. Chassis component according to any one of claims 1 to 4, **characterized in that** the core part (2) has a long fiber content of at least 50% by volume.

6. Chassis component according to any one of claims 1 to 5, **characterized in that** the core part (2) has annular sections (2.2) of which at least two adjacent sections have a common subsection (2.3), the annular sections (2.2) preferably having internal widths of different sizes.

7. Chassis component according to any one of claims 1 to 6, **characterized in that** the core part (2) comprises an elongated or spoke-shaped section (2.4), wherein in the case in which the core part (2) comprises a three-dimensional structure having a plurality of wall-shaped ribs (2.1) and optionally pin-shaped ribs (2.1), a plurality of the wall-shaped ribs (2.1) are oblique or inclined to the centerline of the elongated or spoke-shaped section (2.4).

8. Chassis component according to any one of claims 1 to 7, **characterized in that** in the case where the core part (2) has a three-dimensional structure with a plurality of wall-shaped ribs (2.1) and optionally pin-shaped ribs (2.1), a plurality of the wall-shaped ribs (2.1) are substantially parallel to each other.

9. Chassis component according to any one of claims 1 to 8, **characterized in that** the core part (2) has a web-shaped section (2.5), a plurality of the ribs (2.1) being formed on both sides of the web-shaped section (2.5) in each case.

10. Chassis component according to any one of claims 1 to 9, **characterized in that** at least one of the connection points (4, 5, 6) is formed as a bushing-shaped connection point (4) or in the form of a bearing eye in one piece with the core part (2).

11. Chassis component according to any one of claims 1 to 10, **characterized by** an insert part (7), preferably made of metal, which is arranged in the region of one of the connection points (4, 5, 6), the insert part (7) being connected to the core part (2) and/or the outer sheathing (3) in a substance-locking and/or form-fitting manner.

12. Chassis component according to claim 11, **characterized in that** the insert part (7) has a bearing eye-shaped section (7.1) and/or a lug-shaped section (7.2).

13. Chassis component according to any one of claims 1 to 12, **characterized in that** the outer sheathing (3) encloses the ribs (2.1) in such a way that one or more interstices (10) delimited by adjacent ribs of the ribs (2.1) is/are completely filled by the material of the outer sheathing (3).

14. Chassis component according to any one of claims 1 to 13, **characterized in that** the outer sheathing (3) is made of thermoplastic, preferably polyamide, particularly preferably polyamide 6.6, the plastic preferably containing inorganic fibers, particularly preferably inorganic long fibers, for example carbon fibers and/or glass fibers and/or ceramic fibers.

## Revendications

1. Élément de châssis pour un véhicule automobile, en particulier un bras de suspension (1), l'élément de châssis présentant une pièce centrale (2) qui présente au moins un premier point d'attache (4) et au moins un deuxième point d'attache (5, 6), et avec une enveloppe extérieure (3) en matière plastique, de préférence en matière plastique renforcée de fibres, enveloppant partiellement ou complètement la pièce centrale (2), la pièce centrale (2) étant fabriquée en matière plastique renforcée de fibres par moulage par injection,
**caractérisé en ce que** la pièce centrale (2) présente une structure tridimensionnelle avec de multiples nervures (2.1) en forme de paroi et/ou de tige, au moins 60%, de préférence au moins 80%, de manière particulièrement préférée au moins 95% des nervures (2.1) ayant chacune une épaisseur maximale de 5 mm, l'enveloppe extérieure (3) enveloppant les nervures (2.1), les nervures (2.1) étant enrobées par l'injection et/ou par le moulage de la matière plastique de l'enveloppe extérieure (3), et la pièce centrale (2) ayant une proportion de fibres longues d'au moins 40 % en volume.

2. Élément de châssis selon la revendication 1, **caractérisé en ce que** les nervures (2.1) ont une épaisseur située dans la plage de 0,5 à 5 mm, de préférence dans la plage de 0,5 à 4 mm.

3. Élément de châssis selon la revendication 1 ou 2, **caractérisé en ce que** les nervures (2.1) ont un rapport hauteur/épaisseur situé dans la plage de 3:1 à 5:1.

4. Élément de châssis selon l'une des revendications 1 à 3, **caractérisé en ce que** la pièce centrale (2) est fabriquée en matière thermoplastique, de préférence en polyamide, de manière particulièrement préférée en polyamide 6.6.

5. Élément de châssis selon l'une des revendications 1 à 4, **caractérisé en ce que** la pièce centrale (2) présente une proportion de fibres longues d'au moins 50 % en volume.

6. Élément de châssis selon l'une des revendications 1 à 5, **caractérisé en ce que** la pièce centrale (2) présente des sections annulaires (2.2), dont au moins deux sections voisines ont une section partielle commune (2.3), les sections annulaires (2.2) présentant de préférence des dimensions intérieures différentes.

7. Élément de châssis selon l'une quelconque des revendications 1 à 6, **caractérisé en ce que** la pièce centrale (2) comprend une section allongée ou en forme de rayon (2.4), dans lequel, dans le cas où la pièce centrale (2) comprend une structure tridimensionnelle avec une pluralité de nervures en forme de paroi (2.1) et éventuellement de nervures en forme de tige (2.1), une pluralité desdites nervures en forme de paroi (2.1) s'étend de manière oblique ou inclinée par rapport à la ligne centrale de la section allongée ou en forme de rayon (2.4).

8. Élément de châssis selon l'une quelconque des revendications 1 à 7, **caractérisé en ce que**, dans le cas où la pièce centrale (2) présente une structure tridimensionnelle avec une pluralité de nervures en forme de paroi (2.1) et éventuellement de nervures en forme de tige (2.1), une pluralité de nervures en forme de paroi (2.1) s'étend sensiblement parallèlement les unes aux autres.

9. Élément de châssis selon l'une des revendications 1 à 8, **caractérisé en ce que** la pièce centrale (2) présente une section en forme de l'âme (2.5), une pluralité des nervures (2.1) étant respectivement réalisées des deux côtés de la section en forme de l'âme (2.5).

10. Élément de châssis selon l'une des revendications 1 à 9, **caractérisé en ce qu'**au moins l'un des points d'attache (4, 5, 6) est réalisé en tant que point d'attache (4) en forme de douille ou sous la forme d'un oeillet de montage d'un seul tenant avec la pièce centrale (2).

11. Élément de châssis selon l'une des revendications 1 à 10, **caractérisé par** une pièce d'insertion (7), de préférence en métal, qui est disposée dans la zone de l'un des points d'attache (4, 5, 6), la pièce d'insertion (7) étant reliée par liaison de matière et/ou par liaison de forme à la pièce centrale (2) et/ou à l'enveloppe extérieure (3).

12. Élément de châssis selon la revendication 11, **caractérisé en ce que** la pièce d'insertion (7) présente une section en forme d'oeillet de montage (7.1) et/ou une section en forme de patte (7.2).

13. Élément de châssis selon l'une des revendications 1 à 12, **caractérisé en ce que** l'enveloppe extérieure (3) enveloppe les nervures (2.1) de telle sorte qu'un ou plusieurs espaces intermédiaires (10) délimité(s) par des nervures adjacentes aux nervures (2.1) est/sont entièrement remplis par le matériau de l'enveloppe extérieure (3).

14. Élément de châssis selon l'une des revendications 1 à 13, **caractérisé en ce que** l'enveloppe extérieure (3) est fabriquée en matière thermoplastique, de préférence en polyamide, de manière particulièrement préférée en polyamide 6.6, la matière plastique contenant de préférence des fibres inorganiques, de manière particulièrement préférée des fibres longues inorganiques, par exemple des fibres de carbone et/ou des fibres de verre et/ou des fibres de céramique.
